# EUROPEAN PATENT APPLICATION

(11) **EP 4 254 611 A1**
(43) Date of publication of application: **04.10.2023**
(21) Application number: 22195838.2
(22) Date of filing: 15.09.2022
(51) Int. Cl.: H01M 50/103, H01M 50/15, H01M 50/176, H01M 50/55, H01M 50/553, H01M 50/567, H01M 50/533

(54) **SECONDARY BATTERY**

(30) Priority: 25.03.2022 JP 2022049894
(71) Applicant: KABUSHIKI KAISHA TOSHIBA, Minato-ku Tokyo 105-0023 (JP)
(72) Inventor: Yamamoto, Kuniaki, Tokyo, 105-0023 (JP)
(74) Representative: Hoffmann Eitle

(57) **Abstract**

According to one embodiment, a secondary battery (10) includes an outer container (12) including a lid body (14), an electrode assembly (30), an output terminal (20) provided in the lid body (14) and including a first external thread portion (20a) and a lead (40A, 40B) provided between the electrode assembly (30) and the lid body (14) inside the outer container (12). The lead (40A, 40B) includes a plate-shaped junction (41) opposing the lid body (14) and an internal thread portion (42) provided to penetrate the junction (41), and the first external thread portion (20a) of the output terminal (20) is threaded into the internal thread portion (42) through the lid body (14) to be electrically connected to the junction (41).

## Description

### FIELD

Embodiments described herein relate generally to a secondary battery.

### BACKGROUND

In recent years, secondary batteries with high energy density, for example, lithium-ion secondary batteries, have been widely used as power sources for electronic devices and electric vehicles. Such secondary batteries are constituted by accommodating an electrode assembly and a non-aqueous electrolyte in a rectangular parallelepiped outer container made of aluminum or aluminum alloy. The outer container includes a lid body for which positive or negative electrode output terminal is provided. The output terminal is connected to the electrode assembly via a lead provided inside the outer container.

As a method of connecting an output terminal and a lead to each other, fastening with screws, welding and the like are known.

### BRIEF DESCRIPTION OF THE DRAWINGS

FIG. 1 is a perspective view showing an appearance of a secondary battery according to an embodiment.
FIG. 2 is an exploded perspective view of the secondary battery shown in FIG. 1.
FIG. 3 is a perspective view showing a lead.
FIG. 4 is a perspective view of the lead shown in FIG. 3 as viewed from a rear surface side.
FIG. 5 is a cross-sectional view taken along line A-A shown in FIG. 3.
FIG. 6 is a perspective view illustrating an example of use of the secondary battery of the embodiment.

### DETAILED DESCRIPTION

In general, according to one embodiment, a secondary battery comprises an outer container including a lid body, an electrode assembly including a group of electrodes and current collecting tabs extending from the group of electrodes and accommodated inside the outer container, an output terminal provided in the lid and including a first external thread portion and a lead provided between the electrode assembly and the lid inside the outer container to electrically connect the current collecting tabs and the output terminal to each other. The lead includes a plate-shaped junction opposing the lid body and an internal thread portion provided to penetrate the junction, and the first external thread portion of the output terminal being threaded into the internal thread portion through the lid to be electrically connected to the junction.

Embodiments will be described hereinafter with reference to the accompanying drawings. The disclosure is merely an example, and proper changes within the spirit of the invention, which are easily conceivable by a skilled person, are included in the scope of the invention as a matter of course. In addition, in some cases, in order to make the description clearer, the widths, thicknesses, shapes, etc., of the respective parts are schematically illustrated in the drawings, compared to the actual modes. However, the schematic illustration is merely an example, and adds no restrictions to the interpretation of the invention. Besides, in the specification and drawings, the same or similar elements as or to those described in connection with preceding drawings or those exhibiting similar functions are denoted by like reference numerals, and a detailed description thereof is omitted unless otherwise necessary.

A secondary battery of an embodiment will now be described in detail.

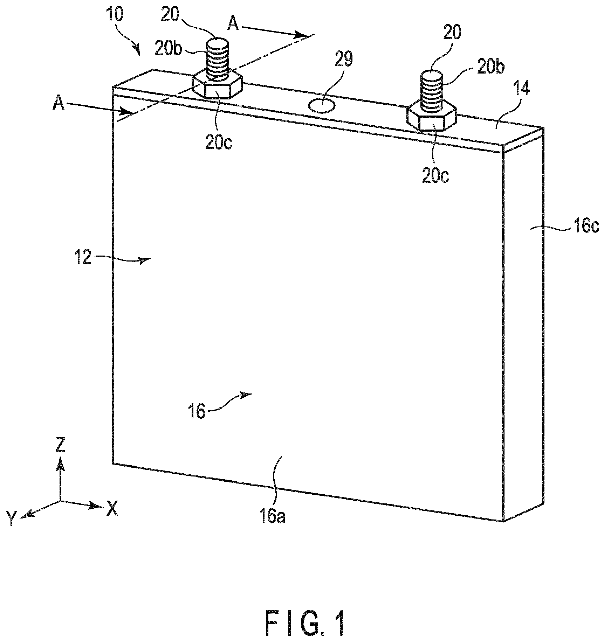

FIG. 1 is a perspective view showing an appearance of the secondary battery of the embodiment.

As shown in FIG. 1, a secondary battery 10 is a non-aqueous electrolytic secondary battery, such as a lithium ion battery, and comprises a flat and substantially rectangular parallelepiped-shaped outer container 12 and an electrode assembly 30, which will be later described, accommodated with a non-aqueous electrolyte inside the outer container 12. The outer container 12 is, for example, a resin container formed of resin. The outer container 12 includes a container body 16 with an opened upper end and a plate-like lid body 14 fixed to the container body 16 to close the opening of the container body 16, and is formed to be airtight inside. In the first embodiment, as described above, the container body 16 is formed of a resin and the lid body 14 are formed of an electrically insulating resin.

The lid body 14 comprises a pair of output terminals 20 and an inlet 29.

Here, the longitudinal direction of the lid body 14 and the container body 16 is defined as an X direction, the width direction of the lid body 14 and the container body 16, which is orthogonal to the longitudinal direction X is defined as a Y direction, and the height direction of the container body 16 is defined as a Z direction.

Note that the outer container 12 is not limited to a resin-made, but it may as well be a metal container formed of a metal such as aluminum alloy, iron or stainless steel.

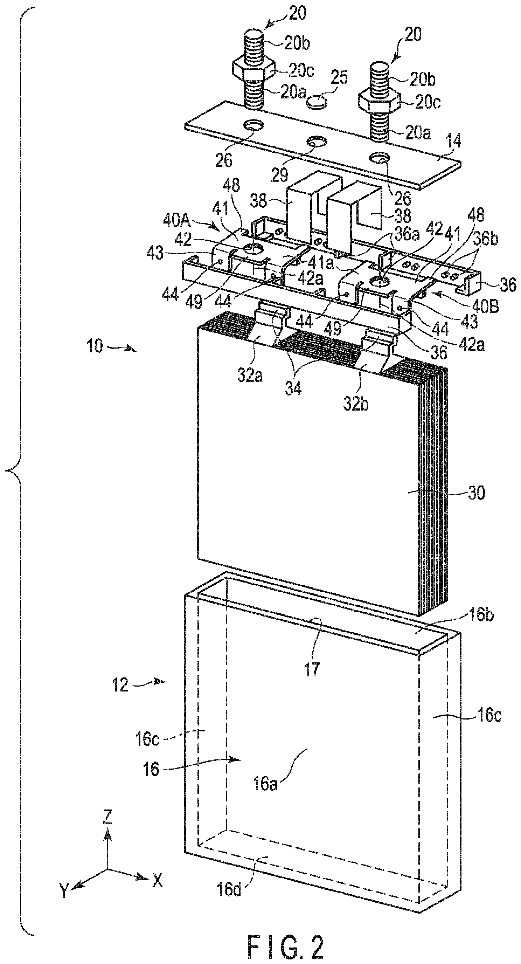

FIG. 2 is an exploded perspective view of the secondary battery shown in FIG. 1.

As shown in FIG. 2, the container body 16 of the outer container 12 includes a rectangular-shaped long side wall 16a, a rectangular-shaped long side wall 16b opposing parallel with an interval to the long side wall 16a, a pair of short side walls 16c opposing each other and a bottom wall 16d. Upper edges of the pair of long side walls 16a and 16b and upper edges of the pair of short side walls 16c define a rectangular-shaped upper opening 17.

The lid body 14 is formed into a rectangular plate with a size approximately equal to that of the upper opening 17. The lid body 14 is fixed to the container body 16 while closing the upper opening 17.

The lid body 14 comprises a pair of circular perforations 26 formed therein. Each of the perforations 26 is a through hole formed to penetrate the lid body 14 in the height direction (thickness direction) Z. The pair of perforations 26 are located in respective end portions of the lid body 14 along the longitudinal direction X and are spaced apart from each other along the longitudinal direction X. Between the pair of perforations 26, an inlet 29 is located. After pouring the non-aqueous electrolyte into the outer container 12 through the inlet 29, the inlet 29 is sealed with, for example, a disk-shaped sealing lid 25.

The output terminals 20 are each formed into a column shape extending along the height direction Z, and includes a first external thread portion 20a formed at one end portion, a second external thread portion 20b formed at the other end portion and an annular flange portion 20c located between the first external thread portion 20a and the second external thread portion 20b, which are integrated into one body. The flange portion 20c is formed into a hexagonal shape, for example, and constitutes a nut. The output terminals 20 are attached to the lid body 14 as the first external thread portions 20a are inserted into the respective perforations 26 of the lid body 14.

As shown in FIG. 2, the electrode assembly 30 accommodated in the outer container 12 is constituted by, for example, stacking a plurality of sheet-shaped positive electrode plates and negative electrode plates alternately one on another with separators interposed between each pair. The positive electrode plates each include a plate-shaped positive electrode current collector, and a positive electrode active material layer formed on at least one side of the positive electrode current collector, and a positive electrode current collecting tab 32a extending from one end of the positive electrode current collector in the height direction Z. The negative electrode plates each include a plate-shaped negative electrode collector, a negative electrode active material layer formed on at least one side of the negative electrode collector, and a negative electrode current collection tab 32b extending from one end of the negative electrode current collector along the height direction Z. The separator has electrically insulating properties and electrically insulates the negative electrode plate and the positive electrode plate from each other.

The current collectors and current collecting tabs of the negative electrode plates and positive electrode plates are each formed from a metal foil having a thickness of about 5 to 50 µm, for example. The material of the metal foil may vary depending on the type of the active material used for the positive and negative electrodes, but, for example, a metal foils of aluminum, aluminum alloy, copper, or copper alloy, a conductive resin film or the like may be used.

The positive electrode current collecting tabs 32a extend outward from one end of the electrode assembly (electrode group) 30 and are stacked in the width direction Y. The extending portions of the positive electrode current collecting tabs 32a may be collectively held by a backup lead 34 bent into a U-shape. The positive electrode current collecting tabs 32a are located on one end side of the electrode assembly 30 in the longitudinal direction X.

The negative electrode current collecting tabs 32b extend outward from one end of the electrode assembly 30 and are stacked in the width direction Y. The extending portions of the negative electrode current collecting tabs 32b are collectively held by a backup lead 34 bent into a U-shape.
The negative electrode current collecting tabs 32b are located at the other end side of the electrode assembly 30 in the longitudinal direction X.

As described above, the positive electrode current collecting tabs 32a and the negative electrode current collecting tabs 32b extend in the same direction from one end and of the electrode assembly 30, and are located at intervals from each other along the longitudinal direction X of the electrode assembly 30.

The electrode assembly 30 configured as described above is accommodated inside the container body 16 in such a manner that one end surface of the electrode assembly 30, the positive electrode current collecting tabs 32a and the negative electrode current collecting tabs 32b are directed to oppose the lid body 14 along the height direction Z. Between the one end surface of the electrode assembly 30 and the lid body 14, a predetermined interval is provided.

As shown in FIG. 2, the secondary battery 10 comprises a pair of insulators 36, an adhesive member 38, a positive electrode lead 40A and a negative electrode lead 40B provided in a space between the electrode assembly 30 and the lid body 14 inside the outer container 12.

The insulators 36 are formed, for example, of an electrically insulating resin. The insulator 36 is formed into a frame shape to enclose the space between the lid body 14 and the electrode assembly 30, and is disposed in contact with an inner surface of the container body 16. The insulators 36 electrically insulate the positive electrode lead 40A, the negative electrode lead 40B, the positive electrode current collecting tabs 32a, and positive electrode current collecting tabs 32b from the container body 16, and also functions as a spacer to maintain the interval between the lid body 14 and the electrode assembly 30.

For example, an insulator 36 may be formed by combining a pair of divided insulator members 36, into one to form a frame body. Each insulator 36 is formed into a slender plate extending along the longitudinal direction X, and both ends of the longitudinal direction X are bent in the width direction Y. The insulator 36 includes an outer surface in contact with the inner surface of the container body 16, an inner surface on an opposite side thereto, two ribs 36a protruding from the inner surface in the central portion of the longitudinal direction X, and a plurality of, for example, four engagement projections 36b protruding from the inner surface between the rib 36a and one end.

The adhesive member 38 is, for example, a strip-like adhesive tape. The adhesive member 38. The adhesive member 38 is provided on an outer surface of each insulator 36, an upper surface of each insulator 36, which opposes the lid body 14, and a pair of side surfaces of the electrode assembly 30 along the width direction Y. In one example, however, it is located on upper surfaces of the ribs 36a of each insulator 36. The adhesive member 38 holds each insulator 36 and the electrode assembly 30 in an integrated state.

The positive electrode lead 40A is located between the insulators 36 in the width direction Y, and electrically connects the output terminals 20 and the positive electrode current collecting tabs 32a respectively to each other. The negative electrode lead 40B is located between the insulators 36 in the width direction Y and electrically connects the output terminals 20 and the negative electrode current collecting tabs 32B respectively to each other. In this embodiment, the positive electrode lead 40A and the negative electrode lead 40B have respective configurations and shapes identical to each other.

The configuration of the lead of the secondary battery 10 in this embodiment will now be described in detail, by focusing on the positive electrode lead 40A as a typical example.

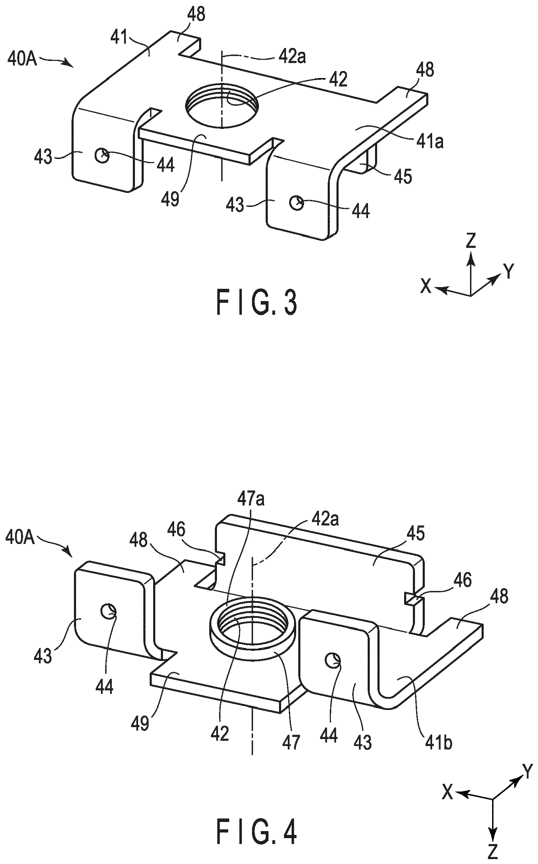

FIG. 3 is a perspective view of the positive electrode lead, and FIG. 4 is a perspective view of the positive electrode lead as viewed from a different direction.

As shown in FIGS. 3 and 4, the positive electrode lead 40A is constituted by bending a conductive metal sheet material. For example, the positive electrode lead 40A includes a rectangular first junction 41, a rectangular second junction 45 extending from one side edge of the first junction 41 so as to be substantially perpendicular to the first junction 41, and a rectangular mount portion 43 extending from the other side edge of the first junction 41 so as to be substantially perpendicular to the first junction 41, which are integrated into one body.

The first junction 41 is formed into the shape of a rectangular plate with a pair of side edges extending along the longitudinal direction X, and includes an upper surface 41a opposing the lid body 14 and a lower surface 41b located on an opposite side to the upper surface 41a. The first junction 41 includes a pair of first engagement projecting portions 48 projecting in a plane direction from respective end portions of one side edge beyond the second junction 45, and a second engagement projecting portion 49 projecting in the surface direction from a central portion of the other side edge beyond the mount portion 43.

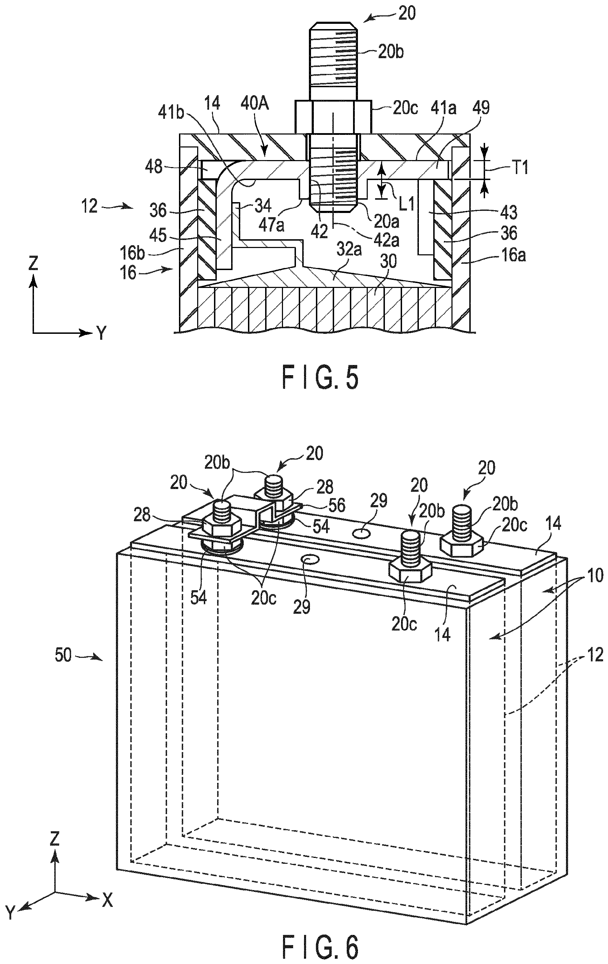

Further, the first junction 41 includes a cylindrical protruding portion 47 provided to protrude substantially from a central portion of the lower surface 41b and an internal thread portion 42 formed to penetrate the first junction 41 and the protruding portion 47 along the height direction Z. The internal thread portion 42 is provided for the first external thread portion 20a of the output terminal 20 to be screwed therein. The details of the internal thread portion 42 will be described later in the explanation of the internal configuration of the secondary battery 10 shown in FIG. 5.

The second junction 45 extends out in the form of a plate along the height direction Z and is disposed to oppose parallel to the long side wall 16b of the container body 16. In a pair of side edges of the second joint 45 extending along the height direction Z, engagement recesses 46 are respectively provided. Each engagement recess 46 is formed in such a position and with such dimensions to be able to engage the respective engagement projection 36b of the insulator 36. When the engagement recesses 46 engage with the engagement projections 36b, the positive electrode lead 40A and the insulator 36 are coupled with each other.

Each of the mount portions 43 is arranged to oppose parallel to the long side wall 16a of the container body 16. The mount portions 43 each include a mount hole 44 formed to penetrate therethrough along the width direction Y. The mount hole 44 is formed in such a position and with such dimensions to be able to engage with the respective engagement projection 36b of the insulator 36. When the mounting holes 44 engage with the engagement projections 36b, the positive electrode lead 40A and the insulator 36 are coupled with each other.

The internal configuration of the assembled secondary battery 10 will now be described.

FIG. 5 is a cross-sectional view taken along line A-A in FIG. 1.

As shown in FIG. 5, the outer container 12 includes the container body 16 with an opening at the upper end thereof and the lid body 14 which closes the opening of the container body 16. The electrode assembly 30, the positive electrode lead 40A and the pair of insulators 36 are accommodated inside the outer container 12. Meanwhile, the output terminal 20 is attached to the outer container 12 from the outside of the outer container 12 (from above the lid body 14).

The electrode assembly 30 is located between the pair of long side walls 16a and 16b of the container body 16, and includes the positive electrode current collecting tab 32a extending toward the lid body 14. The distal end of the positive electrode current collecting tab 32a is held by the backup lead 34 to be connected to the second junction 45 of the positive electrode lead 40A.

The pair of insulators 36 are aligned along the width direction Y and located between the electrode assembly 30 and the lid body 14. The outer surface of each insulator 36 is in contact with the inner surface of the container body 16, and the inner surface of each insulator 36 is in contact with the outer surface of the positive electrode lead 40A.

The positive electrode lead 40A is located between the electrode assembly 30 and the lid body 14, and is fixed to the insulator 36 as the engagement recess portion 46, the mount hole 44 and the engagement projection 36b of each insulator 36 are respectively engaged with each other. (For the engagement recess portion 46, the mount hole 44 and the engagement projection 36b, see FIGS. 2, 3 and 4).

The positive electrode lead 40A includes the first junction 41 in contact with the inner surface of the lid body 14 and the second junction 45 extending substantially parallel to the first junction 41 and the lid body 14.

The first junction 41 includes the first engagement projecting portion 48, the second engagement projecting portion 49, the protruding portion 47 protruding from the lower surface of the first junction 41, and the internal thread portion 42 formed to penetrate the first junction 41 and the protruding portion 47. The first engagement projecting portion 48 is brought into contact with the upper surface of one insulator 36 and the second engagement projecting portion 49 is brought into contact with the upper surface of the other insulator 36, and thus the positive electrode lead 40A is held by each insulator 36.

The protruding portion 47 can be formed, for example, by a burring process. A length L1 of the internal thread portion 42 in a direction along the axis 42a (the length from the upper surface 41a to the end surface 47a located on the opposite side) is greater than a thickness T1 of the positive electrode lead 40A. Note that the plate thickness T1 here refers to the distance between the upper surface 41a and the lower surface 41b of the first junction 41 along the height direction Z. For example, the length L1 of the internal thread portion 42 is 2 to 2.5 mm, and the thickness T1 of the first junction 41 is about 1 mm.

However, when the thickness T1 of the first junction 41 is 2 mm or more, there is no need to provide the protruding portion 47. When the protruding portion 47 is provided, the length L1 of the internal thread portion 42 and the thickness T1 of the first junction 41 are equal to each other.

The second junction 45 is joined to the positive electrode current collecting tabs 32a and the backup lead 34. Examples of the joining method are laser welding, ultrasonic welding, resistance welding and the like.

The output terminal 20 includes a first external thread portion 20a, a second external thread portion 20b, and a flange portion 20c located between the first external thread portion and the second external thread portion.

The first external thread portion 20a is threaded into the internal thread portion 42 of the positive electrode lead 40A through a respective perforation 26 of the lid body 14 until the flange portion 20c is brought into contact with the outer surface of the lid body 14. Thus, the output terminal 20 and the positive electrode lead 40A are fixed to the outer and inner surfaces of the lid body 14, respectively, and the output terminal 20 is electrically connected to the positive electrode lead 40A.

The assembly procedure of the secondary battery of this embodiment will now be described.

As shown in FIG. 2, first, the outer container 12, the electrode assembly 30, the leads (the positive electrode lead 40A and the negative electrode lead 40B), the insulators 36, the adhesive member 38 and the output terminal 20 are prepared. Next, the positive electrode current collecting tabs 32a of the electrode assembly 30 and the positive electrode lead 40A are connected to each other, and the negative electrode current collecting tabs 32b and the negative electrode lead 40B are connected to each other.

Then, the insulators 36 are mounted from an outer side of the lead along the width direction Y. At this time, the mount holes 44 of the respective lead are engaged with the engagement projections 36b of one insulator 36, and the engagement recesses 46 of the lead are engaged with the engagement projections 36b of the other insulator 36 (see FIGS. 3 and 4).

Thereafter, the upper surface of the insulator 36, which opposes the lid body 14, the outer surface of each insulator 36, the outer surface of the electrode assembly 30 are covered by the adhesive material 38 and bonded together. In this embodiment, however, the upper surfaces of the ribs 36a are included as the upper surface of the insulator 36. With this configuration, the electrode assembly 30, the leads and the insulators 36 are retained in an integrated state.

After being integrated, the electrode assembly 30, the leads and the insulators 36 integrated all together are accommodated inside the container body 16, and the lid body 14 is fixed to the upper opening 17 of the container body 16 to seal the inside of the container body 16.

Lastly, each output terminal 20 is inserted through the respective perforation 26 of the lid body 14, and the first external thread portion 20a of each output terminal 20 is threaded into the respective internal thread portion 42 of each respective lead.

Advantageous effects of the secondary battery of this embodiment will now be described.

As shown in FIGS. 2 and 5, the secondary battery 10 comprises the outer container 12, the electrode assembly 30, the output terminals 20, the leads (the positive electrode lead 40A and the negative electrode lead 40B). The leads each include a plate-shaped first junction 41 opposing the lid body 14, a first junction 41 and an internal thread portion 42 provided to penetrate the first junction and the protruding portion 47, and the first external thread portion 20a of the output terminal 20 is threaded into the respective internal thread portion 42. With this configuration, the secondary battery 10 can be assembled from the lower part in order when assembling, and further, disassembled from the upper part when disassembling. In other words, all parts used in the secondary battery 10 can be accessed from the upper part, thereby making it possible to obtain a secondary battery 10 facilitated to assemble. In addition, nuts for fixing the leads and the output terminal 20 together are no longer required, and therefore the number of parts can be reduced, thus reducing the costs.

As shown in FIG. 5, when the plate thickness T1 of the lead is 2 mm or less, the internal thread portion 42 of the lead has a length greater than thickness T1 of the lead. With this configuration, it is possible to secure a sufficient engagement between the first external thread portion 20a of the output terminal 20 and the internal thread portion 42 of the lead. Moreover, since the plate thickness T1 of the lead can be made thinner, lighter weight and lower cost can be achieved.

An example of the use of the secondary battery of this embodiment will now be described.

FIG. 6 is a perspective view showing an example of the use of the secondary battery 10 of this embodiment.

As shown in FIG. 6, two of the secondary batteries 10 are accommodated side by side along the width direction Y inside a case 50 with the lid body 14 being located on an upper side. That is, in the case of the use described here, the output terminals 20 can be attached thereto from above.

The secondary batteries in this use example each further comprise a connecting member 56 with one end fixed to the output terminal 20 of the positive electrode and the other end fixed to the output terminal 20 of the negative electrode, and a washer 54 provided between the flange 20c of each output terminal 20 and the lid body 14.

The two secondary batteries 10 are electrically connected to each other via the connection member 56 fixed to the second external thread portion 20b with the nut 82 by tightening, the output terminal 20 of the positive electrode, and the output terminal 20 of the negative electrode. The connecting member 56 is, for example, a bus bar formed of a metal such as aluminum or copper. Note here that the method of fixing the connecting member 56 to the output terminal 20 is not limited to the tightening of the second external thread portion 20b and the nut 28 together. For example, it is also possible to fix the output terminal 20 by welding to an end portion of the output terminal 20 in the height direction Z, outside the outer container 12. In other words, the output terminal 20 can be configured without the second external thread portion 20b.

While certain embodiments have been described, these embodiments have been presented by way of example only, and are not intended to limit the scope of the inventions.
Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A secondary battery (10) comprising:
an outer container (12) including a lid body (14);
an electrode assembly (30) including a group of electrodes and current collecting tabs (32a, 32b) extending from the group of electrodes, and accommodated inside the outer container (12);
an output terminal (20) provided in the lid body (14) and including a first external thread portion (20a); and
a lead (40A, 40B) provided between the electrode assembly (30) and the lid body (14) inside the outer container (12) to electrically connect the current collecting tabs (32a, 32b) and the output terminal (20) to each other,
**characterized in that**:
the lead (40A, 40B) includes a plate-shaped junction (41) opposing the lid body (14) and an internal thread portion (42) provided to penetrate the junction (41), and
the first external thread portion (20a) of the output terminal (20) is threaded into the internal thread portion (42) through the lid body (14) to be electrically connected to the junction (41).

2. The secondary battery (10) of claim 1, **characterized in that**
the junction (41) of the lead (40A, 40B) further includes an upper surface (41a) opposing the lid body (14), a lower surface (41b) opposing the upper surface (41a), and a protruding portion (47) protruding from the lower surface (41b),
the internal threaded portion (42) is provided to penetrate the junction (41) and the protruding portion (47) from the upper surface (41a) to an end surface (47a) of the protruding portion (47), and
an axial length of the internal threaded portion (42) is greater than a thickness of the lead (40A, 40B).

3. The secondary battery (10) of claim 2, **characterized in that**
the thickness of the lead (40A, 40B) excluding the protruding portion (47) is less than 2 mm.

4. The secondary battery (10) of any one of claims 1 to 3, **characterized in that**
the output terminal (20) further includes a flange portion (20c) brought into contact with an outer surface of the lid body (14).

5. The secondary battery (10) of claim 4, **characterized in that**
the output terminal (20) is formed into a column shape and includes the first external thread portion (20a) formed at an axial one end thereof, a second external thread portion (20b) formed at an other axial end, and the flange portion (20c) provided between the first external thread portion (20a) and the second external thread portion (20b).
